(19) Europäisches Patentamt
European Patent Office
Office européen des brevets

(11) EP 0 404 081 B1

(12) **EUROPÄISCHE PATENTSCHRIFT**

(45) Veröffentlichungstag und Bekanntmachung des Hinweises auf die Patenterteilung:
**31.01.1996 Patentblatt 1996/05**

(51) Int Cl.[6]: **G02F 1/137**, C09K 19/02

(21) Anmeldenummer: **90111598.0**

(22) Anmeldetag: **20.06.1990**

(54) **Ferroelektrische Flüssigkristallelemente mit hoher spontaner Polarisation und geringer Helixganghöhe**

Ferroelectric liquid crystal element with high spontaneous polarization and small helical pitch

Elément à cristal liquide ferro-électrique à polarisation spontanée élevée et à faible hauteur de pas d'hélice

(84) Benannte Vertragsstaaten:
**CH DE FR GB LI NL**

(30) Priorität: **23.06.1989 DE 3920625**

(43) Veröffentlichungstag der Anmeldung:
**27.12.1990 Patentblatt 1990/52**

(73) Patentinhaber:
**HOECHST AKTIENGESELLSCHAFT**
**D-65926 Frankfurt am Main (DE)**

(72) Erfinder:
- **Escher, Claus, Dr.**
  **D-6109 Mühltal (DE)**
- **Hemmerling, Wolfgang, Dr.**
  **D-6231 Sulzbach (Taunus) (DE)**
- **Illian, Gerhard, Dr.**
  **D-6000 Frankfurt am Main (DE)**
- **Harada, Takamasa**
  **D-6370 Oberursel (DE)**
- **Murakami, Mikio**
  **Kakegawa-shi, Shizuoka-ken (JP)**

(56) Entgegenhaltungen:
**EP-A- 0 283 916** **EP-A- 0 309 774**

- **SOVIET TECHNICAL PHYSICS LETTERS. Bd. 14, Nr. 2, Februar 1988, NEW YORK US Seiten 116 - 117; L.A. BERESNEV ET AL.: 'Electrooptic response of a thin layer of a FLC with a small helicoid pitch and a high spontaneous polarization'**
- **JOURNAL OF APPLIED PHYSICS. Bd. 66, Nr. 8, 15. Oktober 1989, NEW YORK US Seiten 3877 - 3882; J. FÜNFSCHILLING ET AL.: 'Fast responding and highly multiplexible distorted helix ferroelectric liquid-crystal displays '**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Schalt- und Anzeigeelemente mit einem Gehalt an ferroelektrischen Flüssigkristall-Mischungen ("FLC-Displays") sind beispielsweise aus der EP-B 0 032 362 (= US-A 4 367 924) bekannt. Sie sind so aufgebaut, daß die FLC-Schicht beidseitig von bestimmten Schichten eingeschlossen ist, die üblicherweise - in dieser Reihenfolge ausgehend von der FLC-Schicht - mindestens eine elektrisch isolierende Schicht, Elektroden und eine Begrenzungsscheibe (z. B. aus Glas) sind. Außerdem enthalten sie einen Polarisator, sofern sie im "guest-host"- oder im reflexiven Modus betrieben werden, oder zwei Polarisatoren, wenn als Modus die transmissive Doppelbrechung genutzt wird. Eine oder vorzugsweise beide elektrisch isolierenden Schichten dienen als sogenannte Orientierungsschicht.

Solche Orientierungsschichten bringen - gemeinsam mit einem hinreichend klein gewählten Abstand der Begrenzungsscheiben - den FLC in der FLC-Mischung in eine Konfiguration, bei der die Moleküle mit ihren Längsachsen parallel zueinander liegen und die smektischen Ebenen senkrecht oder schräg zur Orientierungsschicht angeordnet sind. In dieser Anordnung haben die Moleküle bekanntlich zwei gleichwertige Orientierungen, zwischen denen sie durch pulsartiges Anlegen eines elektrischen Feldes geschaltet werden können, d. h. FLC-Displays sind bistabil schaltbar und die Schaltzeiten liegen im Bereich von µs, wobei sie umgekehrt proportional zur spontanen Polarisation der FLC-Mischung sind.

Als wesentlicher Vorteil solcher FLC-Displays gegenüber den in der industriellen Praxis bisher im wesentlichen noch anzutreffenden LC-Displays wird das erreichbare Multiplex-Verhältnis angesehen, d. h. die maximale Zahl der im zeitlich-sequentiellen Verfahren ("Multiplex"-Verfahren) ansteuerbaren Ziele, das bei FLC-Displays signifikant größer ist. Diese elektrische Ansteuerung basiert im wesentlichen auf der vorstehend beschriebenen Pulsadressierung.

Bei der Weiterentwicklung der FLC-Displays in den letzten 10 Jahren hat sich jedoch ein Nachteil herausgestellt, der darin liegt, daß die genannte Pulsadressierung häufig nur im Falle hinreichend kleiner Werte für die spontane Polarisation zu einem reproduzierbaren Schalten zwischen den beiden stabilen Zuständen führt. Beispielsweise kann man beobachten, daß im FLC-Display, das sich längere Zeit in einem der beiden stabilen Zustände befunden hat ("stehendes Bild"), nur sehr schwer, d. h. nur mit hoher Amplitude oder sehr langer Pulsdauer der angelegten Spannung, in den jeweils anderen Zustand umschalten läßt. Dieses Verhalten einer optischen Hysterese führt bei bildhaften Anzeigen dazu, daß ein über einen längeren Zeitraum eingeschriebenes Bild im Nachfolgebild schemenhaft als "Geisterbild" zu erkennen ist. Es scheint, daß diese Beobachtung einer optischen Hysterese um so ausgeprägter ist, je höher die spontane Polarisation der FLC-Mischung ist. Bei besonders hohen Werten ($P_s > 35$ nC $\cdot$ m$^{-2}$) läßt sich über Pulsadressierung in der Regel überhaupt kein Schalten mehr erzielen. Eine der Vorstellungen über die Ursache dieses Phänomens einer optischen Hysterese geht dahin, daß ionische Verunreinigungen in der FLC-Mischung dafür verantwortlich sein könnten. Die bisher bekannten Lösungsansätze a) unmittelbarer Kontakt zwischen FLC-Mischung und Elektroden und b) aufwendige Reinigung haben noch nicht zu durchgreifenden Erfolgen geführt; die erste Mehode ist zur Vermeidung von elektrischen Kurzschlüssen sehr aufwendig und die zweite erfordert nahezu für jede einzelne Komponente einer Mischung eine spezielle Reinigungsart.

Bei den bisher bekannten FLC-Displays geht man gezielt davon aus, daß der Abstand der Begrenzungsscheiben so gewählt wird, daß die Ausbildung der für ferroelektrische Phasen typischen Verdrillung ("Helix") unterdrückt wird. Dies geschieht derart, daß - siehe die eingangs zitierte EP-B - der Scheibenabstand kleiner als etwa das fünffache der natürlichen Helixganghöhe ist. Wegen des optischen Schaltverhaltens und aus allgemeinen technologischen Gründen ist man aber praktisch nicht in der Lage, den Scheibenabstand beliebig klein einzustellen, so daß in der Praxis ein Abstand von etwa 2 µm eingehalten wird. Deshalb war man bisher bemüht, FLC-Mischungen mit möglichst großer Helixganghöhe zu entwickeln, was auch kürzlich (Gray et al., Thermotropic Liquid Crystals, 1987) noch gefordert wurde, wonach der Plattenabstand weniger als ein Viertel der Helixganghöhe betragen sollte.

In Soviet Technical Physics Letters 1988, 14, 116 - 117 ist eine ferroelekrische Flüssigkristallmischung mit einer Spontanpolarisation von 70 nC/cm$^2$ und einer natürlichen Helixganghöhe von 0,3 - 0,4 µm und deren Verwendung zur Ausnutzung des Distorted-Helix-Ferroelectric (DHF)-Effekts beschrieben.

In der EP-A 0 283 916 werden FLC-Mischungen mit hoher Spontanpolarisation und einer geringen natürlichen Helixganghöhe zur Anwendung in Displays vorgestellt, wobei die Mischungen im Display zumindest teilweise eine Helixstruktur ausbilden.

Aufgabe der vorliegenden Erfindung ist es, FLC-Mischungen zur Verwendung in SSFLC-Displays zu entwickeln, die trotz hoher Werte in der spontanen Polarisation keine optische Hysterese zeigen.

Die Erfindung geht aus von den bekannten FLC-Displays - d. h. Anzeige- und Schaltelementen mit LC-Mischungen, welche eine ferroelektrische Phase zeigen -, die in SSFLC-Technik ("surface stabilized ferroelectric liquid crystal") arbeiten, wie es beispielsweise in der genannten EP-B beschrieben wird. Diese FLC-Displays haben eine Schichtdicke (d. h. Abstand der Begrenzungsscheiben) von 1 bis 10 µm, insbesondere von 1,2 bis 3 µm. Erfindungsgemäß werden in solchen FLC-Displays solche FLC-Mischungen verwendet, die eine hohe spontane Polarisation von $P_s > 20$ nC $\cdot$ cm$^{-2}$ (gemessen bei 25°C), bevorzugt von $P_s > 35$ nC $\cdot$ cm$^{-2}$, insbesondere von 40 nC $\cdot$ cm$^{-2}$ zeigen und eine natürliche Helixganghöhe von weniger als der halben Schichtdicke des genannten SSFLC-Displays, insbesondere von mehr als

1/10 dieser Schichtdicke, aufweisen. Bevorzugt werden solche Displays pulsadressiert.

Gegenstand der Erfindung ist daher die Verwendung von FLC-Mischungen mit hoher spontaner Polarisation von $P_s > 20\ nC \cdot cm^{-2}$ und einer natürlichen Helixganghöhe von weniger als der halben Schichtdicke als LC-Material in einem SSFLC-Display, wobei die Schichtdicke des Materials von 1 bis 10 µm beträgt und wobei die Ausbildung einer Helix in der ferroelektrischen Phase unterdrückt wird.

Ebenfalls Gegenstand der Erfindung ist ein SSFLC-Display mit einem LC-Material, das eine Schichtdicke von 1 bis 10 µm aufweist und bei dem die Ausbildung einer Helix in der ferroelektrischen Phase unterdrückt ist, wobei das LC-Material eine FLC-Mischung mit hoher spontaner Polarisation von $P_s > 20\ nC \cdot cm^{-2}$ und einer natürlichen Ganghöhe von weniger als der halben Schichtdicke des LC-Materials ist.

In bevorzugten Ausführungsformen ist die ferroelektrische Phase eine $S_c^*$-Phase und die Phasenfolge der FLC-Mischung lautet wie folgt:

$$I \rightarrow N^* \rightarrow S_A^* \rightarrow S_c^*;$$

im gesamten Temperaturbereich der N*-Phase beträgt dabei die Helixganghöhe nicht weniger als 8 µm, vorzugsweise nicht weniger als 15 µm. Die angegebenen Eigenschaften (d. h. hohe spontane Polarisation, eine erste bestimmte Helixganghöhe in smektischer und eine zweite bestimmte Helixganghöhe in cholesterischer Phase) werden insbesondere durch nicht-chirale LC-Grundmischungen erfüllt, denen zwei oder mehr geeignete chirale Dotierstoffe zugesetzt werden. Solche chiralen Dotierstoffe tragen zweckmäßig zu wenigstens 20 % zur spontanen Polarisation der Gesamtmischung bei, besitzen gleiches Vorzeichen in den Werten der spontanen Polarisation; gleichzeitig tragen sie zu wenigstens 20 % zur natürlichen Helixganghöhe in der smektischen Phase bei und haben in ihrem Verdrillungsvermögen gleichen Drehsinn; in der $N^*$-Phase weisen zwei der chiralen Dotierstoffe darüber hinaus verschiedene Vorzeichen (ungleicher Drehsinn) in ihrem Verdrillungsvermögen auf.

Zu den chemischen Verbindungen, welche in nicht-chiralen LC-Grundmischungen die genannten Bedingungen erfüllen, zählen insbesondere solche der allgemeinen Formeln (I) und (II)

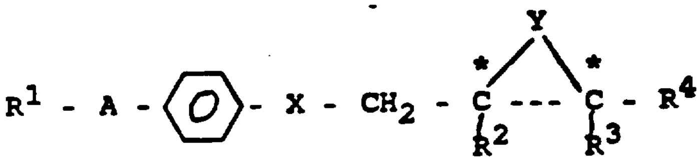

(I)

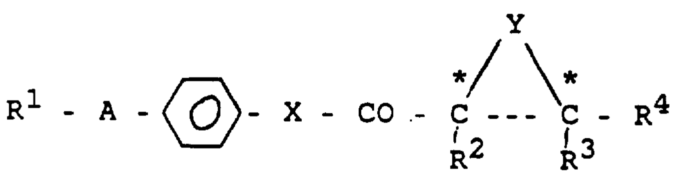

(II)

wobei die Symbole und Indices folgende Bedeutung haben:

$R^1$ = geradkettiges oder verzweigtes $(C_1\text{-}C_{12})$Alkyl, wobei eine oder zwei nicht-benachbarte $-CH_2$-Gruppen durch -O- und/oder -S- ersetzt sein können,

A = Diazin-2,5-diyl oder Azin-2,5-diyl

X,Y = O und/oder S, und

$R^2$, $R^3$, $R^4$ = unabhängig voneinander H, geradkettiges $(C_1\text{-}C_{10})$Alkyl oder verzweigtes $(C_3\text{-}C_{10})$Alkyl, wobei $R^2$, $R^3$ und $R^4$ nicht gleichzeitig H sind.

In besonders bevorzugten Ausführungsformen sind:

$R^1$ = geradkettiges $(C_5\text{-}C_{11})$Alkyl, wobei eine $-CH_2$-Gruppe durch -O- oder -S- ersetzt sein kann;

X,Y = O;

$R^2$, $R^3$ = H und

$R^4$ = geradkettiges oder verzweigtes ($C_3$-$C_7$)Alkyl;

A = Pyrimidin-2,5-diyl.

Überraschend gelang es mit der genannten FLC-Mischung sogar, die - im vorliegenden Fall unerwünschte - Ausbildung einer Helix in der ferroelektrischen Phase zu unterdrücken, wenn die Schichtdicke mehr als das 10fache der natürlichen Helixganghöhe beträgt. Selbst in FLC-Mischungen mit natürlichen Helixganghöhen von < 0,7 µm in der ferroelektrischen Phase tritt bei hohen $P_s$-Werten keine optische Hysterese auf; bei $P_s$-Werten von > 100 nC · $cm^{-2}$ wurden keine "Geisterbilder" mehr beobachtet. Weitere Vorteile der Erfindung liegen im Beibehalten der kurzen Schaltzeiten und in der Möglichkeit, Graustufen darzustellen.

**Beispiele:**

In den nachfolgenden Beispielen werden zwei achirale LC-Grundmischungen A und B sowie verschiedene chirale Dotierstoffe eingesetzt. Im Vergleich dazu werden die Werte einer LC-Grundmischung A mit einer nicht erfindungsgemäßen Kombination zweier chiraler Dotierstoffe untersucht.

LC-Mischung A enthält (in Gew.-%)

11,06 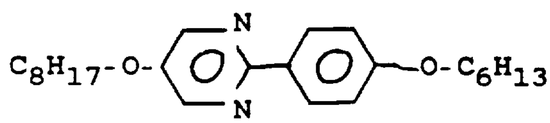 (A1)

5,11 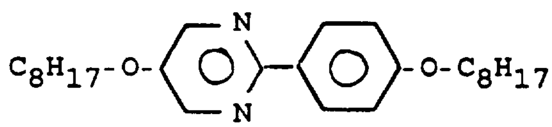 (A2)

11,67 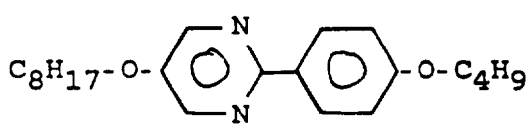 (A3)

9,28 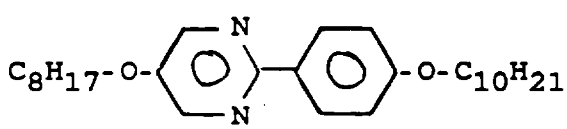 (A4)

15,88 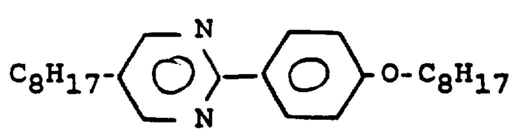 (A5)

17,50 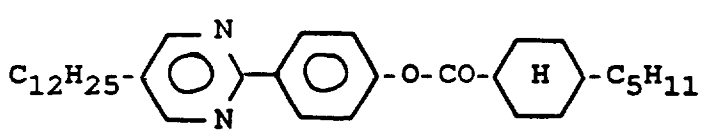 (A6)

17,70 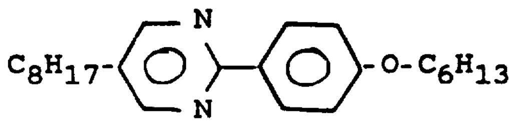 (A7)

11,80 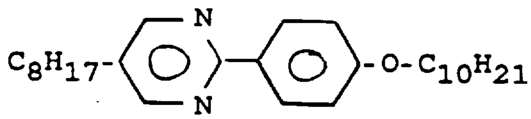 (A8)

Die Mischung zeigt folgende Phasenfolge:

X - 1 $S_c$ 69 $S_A$ 76 N 93 I

LC-Mischung B enthält (in Gew.-%)

| | |
|---|---|
| 13,39 | A1 (=B1) |
| 4,49 | A2 (=B2) |
| 14,78 | A3 (=B3) |
| 8,14 | A4 (=B4) |

8,16 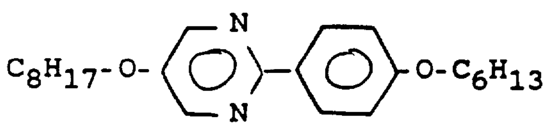 (B5)

19,04 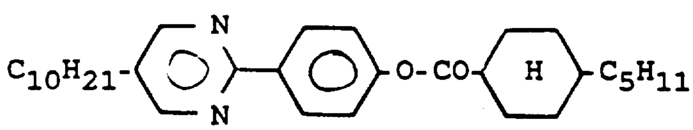 (B6)

12,00 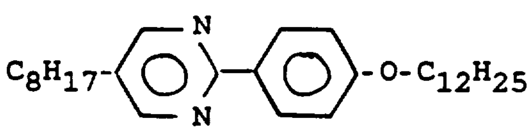 (B7)

20,00 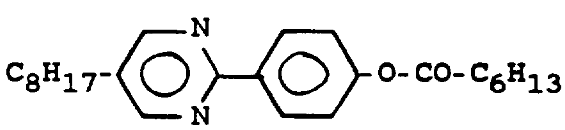 (B8)

Die Mischung zeigt folgende Phasenfolge:

X - 6 $S_c$ 71 $S_A$ 78 N 94 I

Beispiele für erfindungsgemäß geeignete Dotierstoffe sind:

Dotierstoff D 1

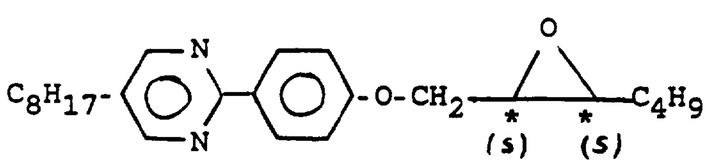

Dotierstoff D 2

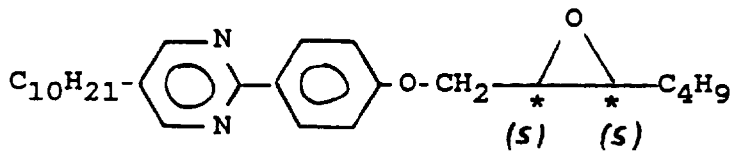

Dotierstoff D 3

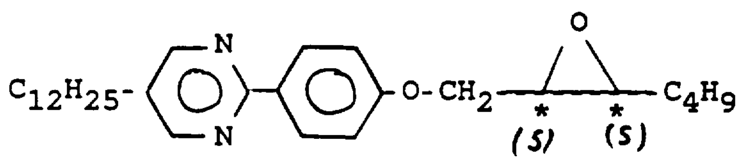

Dotierstoff D 4

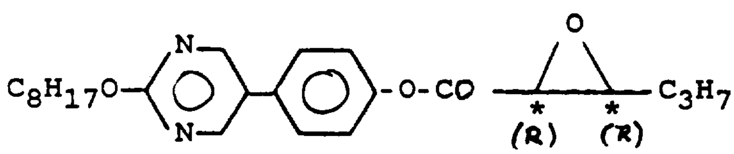

Dotierstoff D 5

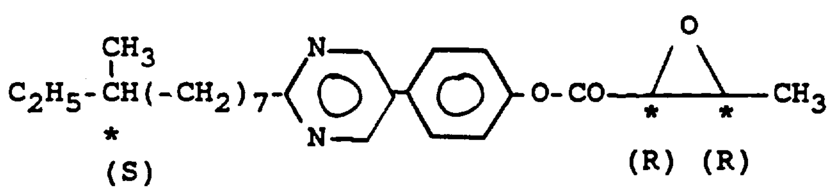

Dotierstoff D 6

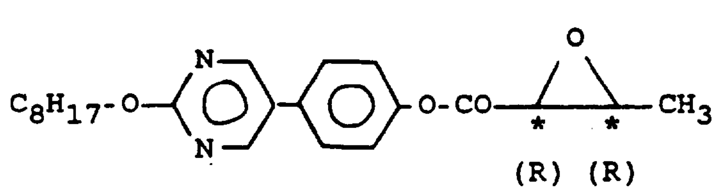

Im einzelnen zeigen die aufgeführten Dotierstoffe in den LC-Mischungen A und/oder B bei 10 % Zumischung die folgenden Daten (siehe Tabelle I).

Aus den genannten Dotierstoffen und den ebenfalls aufgeführten LC-Mischungen wurden unter Berücksichtigung der vorstehenden Daten die folgenden erfindungsgemäßen Beispiele (FLC-Mischungen) erzeugt:

**Beispiel 1**

Die FLC-Mischung M1 besitzt folgende Zusammensetzung (in Mol-%)

| | |
|---|---|
| LC-Mischung A | 65,6 |
| Dotierstoff D1 | 11,4 |
| Dotierstoff D2 | 5,7 |
| Dotierstoff D3 | 11,4 |
| Dotierstoff D5 | 5,9 |

und die Phasenfolge $S_c^*$ 63 $S_A^*$ 74 N* 78 I

**Beispiel 2**

Die FLC-Mischung M2 besitzt folgende Zusammensetzung

| | |
|---|---|
| LC-Mischung A | 70,6 |
| Dotierstoff D1 | 23,0 |
| Dotierstoff D4 | 7,0 |

und die Phasenfolge $S_c^*$ 64 $S_A^*$ 65,5 N* 80 I

**Beispiel 3**

Die FLC-Mischung M3 besitzt folgende Zusammensetzung

| | |
|---|---|
| LC-Mischung B | 72,0 |
| Dotierstoff D1 | 8,8 |
| Dotierstoff D2 | 4,4 |
| Dotierstoff D3 | 8,8 |
| Dotierstoff D8 | 6,0 |

und die Phasenfolge $S_c^*$ 68,5 $S_A^*$ 76 N *83,5 I

**Tabelle I**

| Zugesetzter Dotierstoff | LC-Mischung | Meßtemperatur (°C) | Verdrillungsvermögen HTP in $S_c^*$ ($\mu m^{-1}$) | HTP in $N^*$ ($\mu m^{-1}$) | $P_s$ ($nC \cdot cm^{-2}$) |
|---|---|---|---|---|---|
| D1 | A | 10 | + 9,7 | < 0 | + 18 |
| | A | 20 | + 7,1 | | + 13 |
| | B | 10 | - | - | + 21 |
| | B | 20 | - | | + 16 |
| D2 | A | 10 | + 9,7 | < 0 | + 18 |
| | A | 20 | + 6,7 | | + 14 |
| | B | 10 | - | < 0 | + 22 |
| | B | 20 | - | | + 17 |
| D3 | A | 10 | + 8,6 | < 0 | + 19 |
| | A | 20 | + 5,2 | | + 15 |
| | B | 10 | - | < 0 | + 23 |
| | B | 20 | - | | + 18 |
| D4 | A | 10 | + 5,7 | > 0 | + 54 |
| | A | 20 | + 4,3 | | + 50 |
| D5 | A | 10 | + 21,7 | > 0 | + 44 |
| | A | 20 | + 12,0 | | + 34 |
| D6 | B | 10 | > 0 | > 0 | + 52 |
| | B | 20 | | | + 45 |

**Vergleichsbeispiel V1**

Die FLC-Mischung VM 1 besitzt folgende Zusammensetzung

| | |
|---|---|
| LC-Mischung A | 77,7 |
| Dotierstoff D7 | 10,3 |
| Dotierstoff D8 | 5,0 |
| Dotierstoff D4 | 7,0 |

Dotierstoff D7

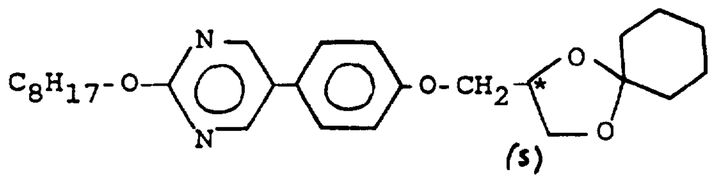

Dotierstoff D8

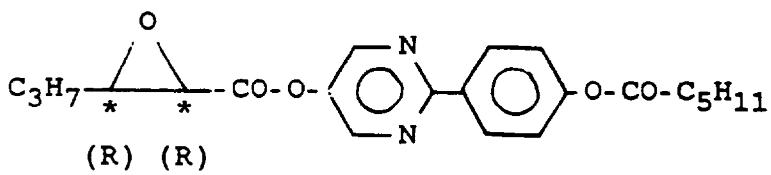

und die Phasenfolge $S_c^*$ 58 $S^*_A$ 67 N* 78 I.

Bei einer Temperatur von 15°C zeigt diese FLC-Mischung VM1 einen Wert für $P_s$ von + 55 nC · $cm^{-2}$. Die Dotierstoffe D7 und D8 besitzen in der $S_c^*$-Phase ein unterschiedliches Vorzeichen in ihrem Verdrillungsvermögen und ergeben in der Summe eine gegenüber der Zelldicke (Schichtdicke) große Ganghöhe.

Die Meßergebnisse der erfindungsgemäßen Beispiele 1 bis 3 sind in der Tabelle II dargestellt. Die Ganghöhe von M1 bis M3 in der cholesterischen Phase ist für alle gemessenen Temperaturen größer als 8 µm. Bei einer Pulsadressierung bei 15°C werden bipolare Pulse einer Gesamtbreite von 400 µs und einer Höhe von 3 V/µm erzeugt (mit M1), die Zwischenräume zwischen den Pulsen betragen 20 ms. Ein Vergleich mit VM1 führt nicht zu den Pulshöhen der erfindungsgemäßen Mischungen, sondern zu der eingangs beschriebenen optischen Hysterese. Der optische Kontrast (in belichteten Einheiten) wurde als Transmissionsunterschied zwischen den beiden bistabilen Zuständen in einer (wie angegeben dicken) Testzelle ermittelt (siehe Tabelle II).

Tabelle II

| FLC-Mischung | Meßtemperatur (°C) | Ganghöhe Z in $S_c^*$ (µm) | $P_s$ (nC·$cm^{-2}$) | Kontrast CR |
|---|---|---|---|---|
| M1 (Testzelle 2,6 µm) | 10 | + 0,25 | + 66 | 0,40 |
| | 15 | + 0,32 | + 66 | 0,35 |
| | 20 | + 0,39 | + 55 | 0,33 |
| | 25 | + 0,46 | + 50 | 0,31 |
| M2 (Testzelle 2,04 µm) | 10 | + 0,38 | + 79 | 0,64 |
| | 15 | + 0,45 | + 72 | 0,35 |
| | 20 | + 0,52 | + 65 | 0,17 |
| | 25 | + 0,59 | + 58 | 0,08 |
| M3 (Testzelle 2,06 µm) | 10 | + 0,38 | + 77 | 2,36 |
| | 15 | + 0,46 | + 70 | 1,98 |
| | 20 | + 0,55 | + 62 | 1,60 |
| | 25 | + 0,63 | + 55 | 1,10 |

## Patentansprüche

1. Verwendung von FLC-Mischungen mit hoher spontaner Polarisation von $P_s > 20\ nC \cdot cm^{-2}$ und einer natürlichen Helixganghöhe von weniger als der halben Schichtdicke als LC-Material in einem SSFLC-Display, wobei die Schichtdicke des Materials von 1 bis 10 µm beträgt und wobei die Ausbildung einer Helix in der ferroelektrischen Phase unterdrückt wird.

2. Verwendung nach Anspruch 1, wobei die Schichtdicke 1,2 bis 3 µm beträgt.

3. Verwendung nach Anspruch 1, wobei die Helixganghöhe größer als 1/10 der Schichtdicke ist.

4. Verwendung nach Anspruch 2, wobei die Helixganghöhe größer als 1/10 der Schichtdicke ist.

5. Verwendung nach Anspruch 1, wobei die FLC-Mischung eine spontane Polarisation von $P_s > 35\ nC \cdot cm^{-2}$ aufweist.

6. Verwendung nach Anspruch 2, wobei die FLC-Mischung eine spontane Polarisation von $P_s > 35\ nC \cdot cm^{-2}$ aufweist.

7. Verwendung nach Anspruch 3, wobei die FLC-Mischung eine spontane Polarisation von $P_s > 35\ nC \cdot cm^{-2}$ aufweist.

8. Verwendung nach Anspruch 1, wobei die FLC-Mischung eine spontane Polarisation von $P_s > 40\ nC \cdot cm^{-2}$ aufweist.

9. Verwendung nach Anspruch 2, wobei die FLC-Mischung eine spontane Polarisation von $P_s > 40\ nC \cdot cm^{-2}$ aufweist.

10. Verwendung nach Anspruch 3, wobei die FLC-Mischung eine spontane Polarisation von $P_s > 40\ nC \cdot cm^{-2}$ aufweist.

11. SSFLC-Display mit einem LC-Material, das eine Schichtdicke von 1 bis 10 µm aufweist und bei dem die Ausbildung einer Helix in der ferroelektrischen Phase unterdrückt ist, wobei das LC-Material eine FLC-Mischung mit hoher spontaner Polarisation von $P_s > 20\ nC \cdot cm^{-2}$ und einer natürlichen Ganghöhe von weniger als der halben Schichtdicke des LC-Materials ist.

12. FLC-Display nach Anspruch 11, das elektrisch pulsadressiert ist.

## Claims

1. Use of FLC mixtures having a high spontaneous polarization of $P_s > 20\ nC{\cdot}cm^{-2}$ and a natural helical pitch of less than one half of the layer thickness as LC material in an SSFLC display, where the layer thickness of the material is from 1 to 10 µm and where the formation of a helix in the ferroelectric phase is suppressed.

2. The use as claimed in claim 1, where the layer thickness is 1.2 to 3 µm.

3. The use as claimed in claim 1, where the helical pitch is greater than 1/10 of the layer thickness.

4. The use as claimed in claim 2, where the helical pitch is greater than 1/10 of the layer thickness.

5. The use as claimed in claim 1, where the FLC mixture exhibits a spontaneous polarization of $P_s > 35\ nC{\cdot}cm^{-2}$.

6. The use as claimed in claim 2, where the FLC mixture exhibits a spontaneous polarization of $P_s > 35\ nC{\cdot}cm^{-2}$.

7. The use as claimed in claim 3, where the FLC mixture exhibits a spontaneous polarization of $P_s > 35\ nC{\cdot}cm^{-2}$.

8. The use as claimed in claim 1, where the FLC mixture exhibits a spontaneous polarization of $P_s > 40\ nC{\cdot}cm^{-2}$.

9. The use as claimed in claim 2, where the FLC mixture exhibits a spontaneous polarization of $P_s > 40\ nC{\cdot}cm^{-2}$.

10. The use as claimed in claim 3, where the FLC mixture exhibits a spontaneous polarization of $P_s > 40\ nC{\cdot}cm^{-2}$.

11. An SSFLC display containing an LC material which has a layer thickness of from 1 to 10 µm and in which the

formation of a helix in the ferroelectric phase is suppressed, where the LC material is an FLC mixture having a high spontaneous polarization of $P_s > 20\ nC \cdot cm^{-2}$ and a natural pitch of less than one half of the layer thickness of the LC material.

**12.** The FLC display as claimed in claim 11, which is electrically pulse addressed.

**Revendications**

**1.** Utilisation de mélanges de cristaux liquides ferroélectriques (CLF) ayant une polarisation spontanée élevée de $P_s$>20 nC.cm$^{-2}$ et une hauteur naturelle du pas de l'hélice inférieure à la moitié de l'épaisseur de couche de la matière à cristaux liquides dans un afficheur à cristal liquide stabilisé par les surfaces (SSFLC), l'épaisseur de la couche de la matière étant de 1 à 10 µm et la formation d'une hélice dans la phase ferroélectrique étant atténuée.

**2.** Utilisation selon la revendication 1, l'épaisseur de couche étant de 1,2 à 3 µm.

**3.** Utilisation selon la revendication 1, la hauteur du pas de l'hélice étant supérieure à 1/10 de l'épaisseur de couche.

**4.** Utilisation selon la revendication 2, la hauteur du pas de l'hélice étant supérieure à 1/10 de l'épaisseur de couche.

**5.** Utilisation selon la revendication 1, le mélange de CLF présentant une polarisation spontanée de $P_s$>35 nC cm$^{-2}$.

**6.** Utilisation selon la revendication 2, le mélange de CLF présentant une polarisation spontanée de $P_s$>35 nC cm$^{-2}$.

**7.** Utilisation selon la revendication 3, le mélange de CLF présentant une polarisation spontanée de $P_s$>35 nC cm$^{-2}$.

**8.** Utilisation selon la revendication 1, le mélange de CLF présentant une polarisation spontanée de $P_s$>40 nC cm$^{-2}$.

**9.** Utilisation selon la revendication 2, le mélange de CLF présentant une polarisation spontanée de $P_s$>40 nC cm$^{-2}$.

**10.** Utilisation selon la revendication 3, le mélange de CLF présentant une polarisation spontanée de $P_s$>40 nC.cm$^{-2}$.

**11.** Afficheur à cristal liquide stabilisé par les surfaces (SSFLC) avec une matière de cristaux liquides qui présente une épaisseur de couche de 1 à 10 µm et où la formation d'une hélice dans la phase ferroélectrique est atténuée, la matière de cristaux liquides étant un mélange de CLF ayant une polarisation spontanée élevée de $P_s$>20 nC.cm$^{-2}$ et une hauteur naturelle du pas de l'hélice inférieure à la moitié de l'épaisseur de la couche de la matière de cristaux liquides.

**12.** Afficheur à CLF selon la revendication 11 qui est adressé par impulsions électriques.